# EUROPEAN PATENT SPECIFICATION

(11) **EP 3 148 768 B1**
(45) Date of publication and mention of the grant of the patent: **01.04.2020**
(21) Application number: 15799399.9
(22) Date of filing: 28.05.2015
(51) Int. Cl.: B29C 45/26, F16F 7/00

(54) **A MOULD TOOL FOR INJECTION MOULDING**
FORMWERKZEUG ZUM SPRITZGIESSEN
OUTIL DE MOULE POUR MOULAGE PAR INJECTION

(30) Priority: 28.05.2014 DK 201470308
(43) Date of publication of application: 05.04.2017
(73) Proprietor: LEGO A/S, 7190 Billund (DK)
(72) Inventor: LAMBÆK, Jens Stamp, DK-7430 Ikast (DK); JENSEN, Steen Bruno Nedergaard, DK-5250 Odense SV (DK)
(74) Representative: Guardian IP Consulting I/S
(86) International application number: PCT/DK2015/050137
(87) International publication number: WO 2015/180734

(56) References cited:
- WO-A1-2009/061269
- DE-A1- 2 935 228
- DE-A1- 3 534 937
- JP-U- H01 116 616
- US-A- 2 233 354
- US-A- 3 724 802
- US-A- 3 897 929
- US-A- 4 496 302
- US-A- 4 499 662
- US-A1- 2008 102 155
- US-B1- 6 206 681
- US-B1- 6 206 681
- US-B1- 6 537 053

## Description

### Prior art:

The present invention relates to an injection-moulding mould configured for being mounted in an injection-moulding apparatus for automated moulding of work pieces from plastics, said injection-moulding mould comprising at least three separate mould parts, comprising an inlet mould part in which is arranged an inlet for injection of liquid plastics from the injection-moulding apparatus, a closing mould part and at least one intermediate mould part arranged between the inlet mould part and the closing mould part, and which mould parts in pairs are separated by mould separation faces and are configured for being capable of being shifted relative to each other along a straight line which is substantially at right angles to the mould separation faces which, in the closed state of the injection-moulding mould where the mould separation faces are in abutment on each other, form a number of mould cavities and, in the open state of the injection-moulding mould where the mould separation faces are pulled away from each other, allow form removal of work pieces moulded in the mould cavities, and wherein, between the inlet mould part and the intermediate mould part, a distance-limiting device is configured that has an end stop configured with a view to limiting the distance by which the intermediate mould plate can be shifted away from the inlet mould part.

Such injection-moulding mould in known from eg DE patent application No. 37 16 796 or DE 29 35 228 A1.

### Object of the invention:

It is the object of the present invention to provide an injection-moulding mould of the kind set forth above, whereby a reduced cycle time for the injection moulding process between each moulding process is enabled.

This is accomplished by the invention as set forth in claim 1; it being thereby accomplished that the shock absorber mitigates the shifting movement of the intermediate mould part away from the inlet mould part briefly before the end stop of the distance-limiting device is hit whereby it is enabled that the injection-moulding mould can be opened faster without there being thereby transmitted a large force impact to the two mould parts with therefrom ensuing increased wear and noise.

According to a preferred embodiment, the shock absorber is interconnected with the distance-limiting device whereby it can be assembled and mounted on the injection-moulding mould as an integral unit.

In the context of this, the distance-limiting device may, according to a simple embodiment, comprise an outer pipe and a rod being arranged to be telescopically displaceable within the outer pipe.

Besides, the shock absorber may conveniently be arranged to be protected within the outer pipe.

According to a further preferred embodiment, the injection-moulding mould further comprises a shock absorber arranged between the closing mould part and the intermediate mould part, said shock absorber being configured such that it mitigates the shifting movement between the closing mould part and the intermediate mould part, when they are moved towards each other and only briefly before the injection-moulding mould is closed. Thereby a further reduced production cycle time is accomplished, it being possible to increase the speed by which the mould parts can be closed without it entailing increased wear or noise.
Figure 1: is a sectional view showing a part of an assembled injection-moulding mould comprising a distance-limiting device with a shock absorber according to the invention.
Figure 2: is an exploded view showing the constituent components of the distance-limiting device with shock absorber shown in figure 1.

### Description of an embodiment:

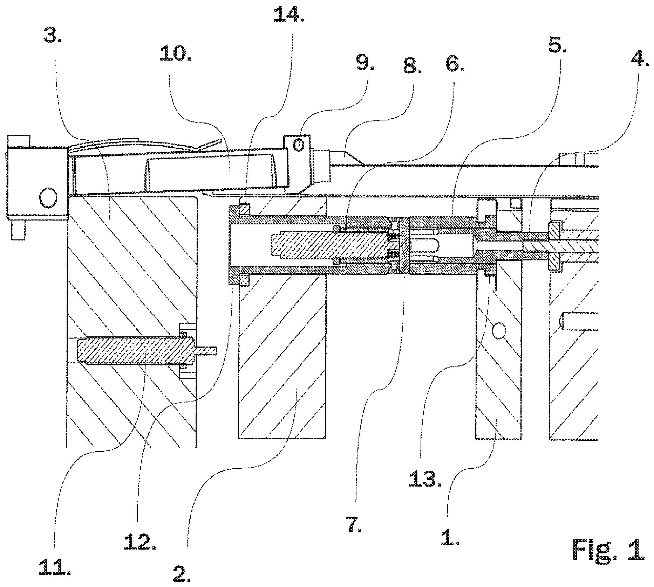

Thus, figure 1 shows a sectional view through a part of an injection-moulding mould according to the invention, with an essentially stationary inlet mould part 1, an intermediate mould part 2 and a closing mould part 3. In the figure, the three mould parts are shifted away from each other to the effect that the injection-moulding mould is open for removal of any moulded work pieces (not shown) from mould cavities that are thereby open into the space between the closing mould part 3 and the intermediate mould part 2 and moulded distributor elements, corresponding to not shown distribution channels that are thereby open into the space between the inlet mould part 1 and the intermediate mould part 2.

In figure 1, the intermediate mould part 2 is moreover shown in its position farthest away from the inlet mould part 1, it being in abutment on the end stop 12 at the one end of the outer pipe 5 of the distance-limiting device 19 on which the intermediate mould part 2 can be shifted.

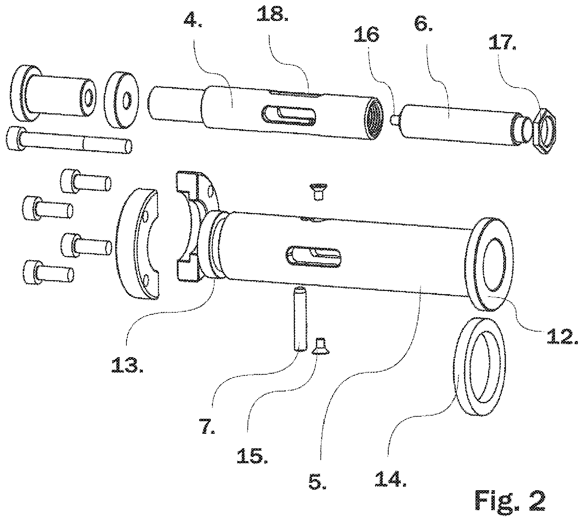

As will appear from figure 2, the distance-limiting device 19 comprises, as mentioned, an outer pipe 5 which, at the one end comprises the end stop 12 and, at the other end, is secured to the inlet mould part 1 at the collar 13. Within the outer pipe 5 a rod 4 is displaceably arranged on which the shock absorber 6 is mounted at the one end in such a manner that the piston 16, when the intermediate mould part 2 abuts on the end stop 12, is pressed into the shock absorber housing, the abutment pin 7 in that position being in abutment on the piston 16 and such that, when the intermediate mould part 2 is shifted from the shown position in a direction towards the inlet mould part 1, the piston 16 is allowed to be shifted out of the shock absorber housing. A not shown spring is arranged in the shock absorber 6 to ensure that the piston 16 is shifted out of the shock absorber housing in the unloaded position of the shock absorber 6.

The abutment pin 7 is securely mounted in the outer pipe 5, but it can be shifted in the slot 18 on the rod 4 to the effect that the rod 4 can be shifted only a distance corresponding to the length of the slot 18.

On the closing mould part 3, a driver 10 is configured that has a driver head 20 having, in the shown position, let go of the intermediate mould part 2. The driver 10 and the driver head 20 are configured such that, when the injection-moulding mould is closed, which means that there is no space between the inlet mould part 1 and the intermediate mould part 2 and between the closing mould part 3 and the intermediate mould part 2, the driver 10 will, when the closing mould part 3 is, from that position, pulled away from the intermediate mould part 2, by a spring load, at the onset be pressed downwards to the effect that the driver head 20 presses the intermediate mould part 2 along with it, until a pin 9 on the driver 10 hits the ramp 8, whereby the driver head 20 is lifted clear of the intermediate mould part 2 and lets go of same just before the intermediate mould part 2 reaches the end stop 12 in the shown position

The shock absorber 6 thus mitigating the movement between the inlet mould part 1 and the intermediate mould part 2 over the last distance when they are shifted away from each other, it is thereby possible, other things being equal, to use increased speeds when opening the injection-moulding mould and ensuing reduced cycle times for each moulding process.

Moreover, the injection-moulding mould has a further shock absorber 11 which is configured in the closing mould part 3 and which mitigates the movement between the closing mould part 3 and the intermediate mould part 2 when they are pressed against each other.

Hereby noise and wear in connection with the closing of the injection-moulding mould are considerably reduced, and it is possible to operate at an increased closing rate.

## Claims

1. An injection-moulding mould configured for being mounted in an injection-moulding apparatus for automated moulding of work pieces from plastics, said injection-moulding mould comprising at least three separate mould parts, comprising an inlet mould part (1) in which is arranged an inlet for injection of liquid plastics from the injection-moulding apparatus, a closing mould part (3) and at least one intermediate mould part (2) arranged between the inlet mould part (1) and the closing mould part (3), and which mould parts (1, 2, 3) in pairs are separated by mould separation faces, and are configured for being capable of being shifted relative to each other along a straight line which is substantially at right angles to the mould separation faces which, in the closed state of the injection-moulding mould where the mould separation faces are in abutment on each other, form a number of mould cavities and, in the open state of the injection-moulding mould where the mould separation faces are pulled away from each other, allow form removal of work pieces moulded in the mould cavities by removal of any moulded work pieces from mould cavities that are thereby open into the space between the closing mould part and the intermediate mould part and moulded distributor elements, corresponding to distribution channels that are thereby open into the space between the inlet mould part and the intermediate mould part, and wherein, between the inlet mould part (1) and the intermediate mould part (2), a distance-limiting device (7) is configured that has an end stop (12) configured with a view to limiting the distance by which the intermediate mould plate (2) can be shifted away from the inlet mould part (1), **characterised in that** a shock absorber (6) is further arranged between the inlet mould part (1) and the intermediate mould part (2), said shock absorber (6) being configured such that it mitigates the shifting movement between the inlet mould part (1) and the intermediate mould part (2), when they are moved away from each other and before the end stop (12) is hit.

2. An injection-moulding mould according to claim 1, **characterised in that** the shock absorber (6) is built integrally with the distance-limiting device (7).

3. An injection-moulding mould according to claim 2, **characterised in that** the distance-limiting device (7) comprises an outer pipe (5) and a rod (4) being arranged to be telescopically displaceable within the outer pipe (5).

4. An injection-moulding mould according to claim 3, **characterised in that** the shock absorber (6) is arranged within the outer pipe (5).

5. An injection-moulding mould according to one or more of the preceding claims, **characterised in that** a shock absorber (11) is further arranged between the closing mould part (3) and the intermediate mould part (2), said shock absorber (6) being configured such that it mitigates the shifting movement between the closing mould part (3) and the intermediate mould part (2), when they are moved towards each other and only briefly before the injection-moulding mould is closed.

## Patentansprüche

1. Spritzgussform, die konfiguriert ist, um in einer Spritzgussvorrichtung zum automatisierten Formen von Werkstücken aus Kunststoffen montiert zu werden, wobei die Spritzgussform zumindest drei separate Formteile umfasst, die ein Einlassformteil (1), in dem ein Einlass zum Einspritzen von flüssigen Kunststoffen von der Spritzgussvorrichtung angeordnet ist, ein Verschlussformteil (3) und zumindest ein Zwischenformteil (2), das zwischen dem Einlassformteil (1) und dem Verschlussformteil (3) angeordnet ist, umfasst und wobei die Formteile (1, 2, 3) in Paaren durch Formtrennflächen getrennt sind und dafür konfiguriert sind, in der Lage zu sein, in Bezug zueinander entlang einer geraden Linie, die im Wesentlichen in rechten Winkeln zu den Formtrennflächen liegt, verschoben zu werden, und die in dem geschlossenen Zustand der Spritzgussform, in dem die Formtrennflächen aneinander anliegen, eine Anzahl von Formhohlräumen bilden und in dem offenen Zustand der Spritzgussform, in dem die Formtrennflächen voneinander weggezogen sind, eine Formentfernung von Werkstücken, die in den Formhohlräumen geformt wurden, ermöglichen, durch ein Entfernen von jeglichen geformten Werkstücken aus den Formhohlräumen, die dadurch in den Raum zwischen dem Verschlussformteil und dem Zwischenformteil öffnen, und von geformten Verteilungselementen, die Verteilungskanälen entsprechen, die dadurch in den Raum zwischen dem Einlassformteil und dem Zwischenformteil öffnen, und wobei zwischen dem Einlassformteil (1) und dem Zwischenformteil (2) eine Abstandsbegrenzungsvorrichtung (7) konfiguriert ist, die einen Endanschlag (12) aufweist, der konfiguriert ist, um den Abstand, um den die Zwischenformplatte (2) weg von dem Einlassformteil (1) verschoben werden kann, zu begrenzen,
**dadurch gekennzeichnet, dass** ein Stoßdämpfer (6) weiter zwischen dem Einlassformteil (1) und dem Zwischenformteil (2) angeordnet ist, wobei der Stoßdämpfer (6) konfiguriert ist, sodass er die Verschiebungsbewegung zwischen dem Einlassformteil (1) und dem Zwischenformteil (2) mindert, wenn sie voneinander weg bewegt werden und bevor der Endanschlag (12) getroffen wird.

2. Spritzgussform nach Anspruch 1, **dadurch gekennzeichnet, dass** der Stoßdämpfer (6) einstückig mit der Abstandsbegrenzungsvorrichtung (7) gebaut ist.

3. Spritzgussform nach Anspruch 2, **dadurch gekennzeichnet, dass** die Abstandsbegrenzungsvorrichtung (7) ein Außenrohr (5) und eine Stange (4) umfasst, die angeordnet ist, um in dem Außenrohr (5) teleskopartig verschiebbar zu sein.

4. Spritzgussform nach Anspruch 3, **dadurch gekennzeichnet, dass** der Stoßdämpfer (6) innerhalb des Außenrohrs (5) angeordnet ist.

5. Spritzgussform nach einem oder mehreren der vorstehenden Ansprüche, **dadurch gekennzeichnet, dass** der Stoßdämpfer (11) weiter zwischen dem Verschlussformteil (3) und dem Zwischenformteil (2) angeordnet ist, wobei der Stoßdämpfer (6) konfiguriert ist, sodass er die Verschiebungsbewegung zwischen dem Verschlussformteil (3) und dem Zwischenformteil (2) mindert, wenn sie aufeinander zu bewegt werden und nur kurz bevor die Spritzgussform geschlossen wird.

## Revendications

1. Moule de moulage par injection configuré pour être monté dans un appareil de moulage par injection pour un moulage automatisé de pièces à usiner en plastique, ledit moule de moulage par injection comprenant au moins trois parties de moule séparées, comprenant une partie de moule d'entrée (1) dans laquelle est agencée une entrée pour une injection de matières plastiques liquides à partir de l'appareil de moulage par injection, une partie de moule de fermeture (3) et au moins une partie de moule intermédiaire (2) agencée entre la partie de moule d'entrée (1) et la partie de moule de fermeture (3), et lesquelles parties de moule (1, 2, 3) par paire sont séparées par des faces de séparation de moule, et sont configurées pour pouvoir être décalées les unes par rapport aux autres le long d'une ligne droite qui est sensiblement perpendiculaire aux faces de séparation de moule qui, à l'état fermé du moule de moulage par injection où les faces de séparation de moule sont en butée les unes sur les autres, forment un certain nombre de cavités de moulage et, à l'état ouvert du moule de moulage par injection où les faces de séparation de moule sont écartées les unes des autres, permettent un retrait de pièces à usiner moulées dans les cavités de moule par enlèvement de toutes les pièces à usiner moulées à partir des cavités de moule qui sont ainsi ouvertes dans l'espace entre la partie de moule de fermeture et la partie de moule intermédiaire et les éléments de distribution moulés, correspondant à des canaux de distribution qui sont ainsi ouverts dans l'espace entre la partie de moule d'entrée et la partie de moule intermédiaire, et dans lequel, entre la partie de moule d'entrée (1) et la partie de moule intermédiaire (2), un dispositif de limitation de distance (7) est configuré avec une butée d'extrémité (12) configurée de manière à limiter la distance dont la plaque de moule intermédiaire (2) peut être décalée de la partie de moule d'entrée (1), **caractérisé en ce qu'**un amortisseur de chocs (6) est en outre agencé entre la partie de moule d'entrée (1) et la partie de moule intermédiaire (2), ledit amortisseur de chocs (6) étant configuré de manière à atténuer le mouvement de décalage entre la partie de moule d'entrée (1) et la partie de moule intermédiaire (2), lorsqu'elles sont éloignées l'une de l'autre et avant que la butée d'extrémité (12) soit touchée.

2. Moule de moulage par injection selon la revendication 1, **caractérisé en ce que** l'amortisseur de chocs (6) est construit d'un seul tenant avec le dispositif de limitation de distance (7).

3. Moule de moulage par injection selon la revendication 2, **caractérisé en ce que** le dispositif de limitation de distance (7) comprend un tuyau extérieur (5) et une tige (4) pouvant être déplacée de manière télescopique à l'intérieur du tuyau extérieur (5).

4. Moule de moulage par injection selon la revendication 3, **caractérisé en ce que** l'amortisseur de chocs (6) est agencé à l'intérieur du tuyau extérieur (5).

5. Moule de moulage par injection selon une ou plusieurs des revendications précédentes, **caractérisé en ce qu'**un amortisseur de chocs (11) est en outre disposé entre la partie de moule de fermeture (3) et la partie de moule intermédiaire (2), ledit amortisseur de chocs (6) étant configuré de manière à atténuer le déplacement de décalage entre la partie de moule de fermeture (3) et la partie de moule intermédiaire (2), lorsqu'elles sont déplacées l'une vers l'autre et seulement brièvement avant que le moule de moulage par injection ne soit fermé.
